# EUROPEAN PATENT APPLICATION

(11) **EP 4 287 367 A1**
(43) Date of publication of application: **06.12.2023**
(21) Application number: 22215809.9
(22) Date of filing: 22.12.2022
(51) Int. Cl.: H01M 50/179, H01M 50/186, H01M 50/188, H01M 50/559

(54) **CYLINDRICAL BATTERY AND ELECTRONIC DEVICE**

(30) Priority: 31.05.2022 CN 202210615465
(71) Applicant: AESC Japan Ltd., Kanagawa, 2520012 (JP)
(72) Inventor: SHAN, Xueyan, Wuxi City, Jiangsu Province (CN)
(74) Representative: Becker, Eberhard

(57) **Abstract**

The disclosure discloses a cylindrical battery and an electronic device. The cylindrical battery includes a case (100), a pole (200), a connecting piece (300), and a sealing nail (400). The case (100) includes a cylindrical side wall and an end wall connected to the side wall, and a first through hole (101) is disposed on the end wall. The pole (200) includes a second through hole (204) and passes through the first through hole (101). The connecting piece (300) is disposed in the case (100) and includes a protrusion (301), the protrusion (301) extends into the second through hole (204), and the protrusion (301) is fixedly connected to the inner wall of the second through hole (204).

## Description

### BACKGROUND

### Technical Field

The disclosure relates to the technical field of batteries, and particularly to a cylindrical battery and an electronic device.

### Description of Related Art

Due to the advantages of high energy density, high safety and low cost, large cylindrical batteries have become one of the important research directions of power batteries for new energy vehicles. For example, the 4680 series of large cylindrical batteries, currently mainly used in power batteries, have outstanding safety and economy, do not deform during use, and have an extremely reliable standard system. At present, a large cylindrical battery mainly includes a case, a battery core, a cover plate, and a pole. The first end of the case is in an open shape, and a through hole is disposed on the end face of the second end; the battery core is disposed in the case, the first tab of the battery core faces the first end of the case, and the second tab of the battery core faces the second end of the case; the negative electrode cover plate sealing cover is disposed on the first end of the case; some of the poles extend into the through hole and are electrically connected to the tabs of the battery core.

In the conventional technology, a large cylindrical battery further includes a connecting piece, and the connecting piece is used for the electrical connection between the tab and the pole. The connecting piece and the pole are usually welded by torque welding or penetration welding. The torque welding needs to be welded inside the battery core, and the welding space is limited, which is not convenient for welding operations; the penetration welding is performed outside the case. Due to the large thickness of the pole, it is difficult to control the welding energy and the welding effect is not good.

Therefore, there is an urgent need to provide a cylindrical battery to solve the problems existing in the conventional technology.

### SUMMARY

The first object of the disclosure is to provide a cylindrical battery, which facilitates the welding between a pole and a connecting piece and has a favorable welding effect.

The second object of the disclosure is to provide an electronic device with high safety by applying the cylindrical battery.

To attain the objects, the disclosure adopts technical solutions as follows.

In a first aspect, a cylindrical battery is provided. The cylindrical battery includes the following:
a case, including a cylindrical side wall and an end wall connected to the side wall, where a first through hole is disposed on the end wall;
a pole, including a second through hole, where the pole passes through the first through hole and is fixed on the case;
a connecting piece, disposed in the case, where the connecting piece includes a protrusion, the protrusion extends into the second through hole, and the protrusion is fixedly connected to the inner wall of the second through hole;
a sealing nail, hermetically fixed in the second through hole.

As an optional solution of the cylindrical battery, the second through hole includes a straight through portion and a first concave portion disposed in sequence along the direction from the inside of the case to the outside of the case, the sealing nail includes a cover portion, and the cover portion is cooperated with the first concave portion.

As an optional solution of the cylindrical battery, the sealing nail further includes a plug portion, and the plug portion is cooperated with the straight through portion.

As an optional solution of the cylindrical battery, the side wall of the first concave portion and the bottom surface of the first concave portion are disposed at an obtuse angle, at a right angle, or at a rounded angle.

As an optional solution of the cylindrical battery, the surface of the protrusion facing the sealing nail does not exceed the bottom surface of the first concave portion.

As an optional solution of the cylindrical battery, the surface of the sealing nail facing away from the connecting piece does not exceed the end surface of the pole outside the case.

As an optional solution of the cylindrical battery, the cover portion is welded and fixed to the bottom surface of the first concave portion.

As an optional solution of the cylindrical battery, a groove is disposed on the surface of the cover portion facing away from the connecting piece.

As an optional solution of the cylindrical battery, the surface of the protrusion facing the sealing nail protrudes from the end wall of the case.

As an optional solution of the cylindrical battery, the protrusion includes a third through hole, and the third through hole communicates with the second through hole.

As an optional solution of the cylindrical battery, the pole includes a limiting portion and a connecting portion, the limiting portion is located outside the case, the connecting portion passes through the first through hole, and the second through holes penetrate the connecting portion.

As an optional solution of the cylindrical battery, the diameter of the connecting portion is D₀, the diameter of the second through hole is D₁, and 0.5D₀<D₁<0.8D₀.

As an optional solution of the cylindrical battery, the cylindrical battery further includes a sealing element, the sealing element is disposed around the connecting portion, and at least part of the sealing element is located between the limiting portion and the end wall of the case.

As an optional solution of the cylindrical battery, one end of the protrusion facing the sealing nail is welded and fixed to the inner wall of the second through hole.

As an optional solution of the cylindrical battery, the second through hole further includes a second concave portion, the second concave portion is located between the straight through portion and the first concave portion, and one end of the protrusion facing the sealing nail is riveted and fixed to the second concave portion.

In a second aspect, an electronic device including the illustrated cylindrical battery is provided.

### Beneficial effects:

The cylindrical battery provided by the disclosure includes a case, a pole, a connecting piece and a sealing nail. The case includes a cylindrical side wall and an end wall connected to the side wall, and a first through hole is disposed on the end wall. The pole includes a second through hole, and the pole passes through the first through hole. The connecting piece is disposed in the case, the connecting piece includes a protrusion, the protrusion extends into the second through hole, and the protrusion is fixedly connected to the inner wall of the second through hole. The sealing nail is hermetically fixed in the second through hole. In the cylindrical battery, the second through hole is formed on the pole, and the protrusion is disposed on the connecting piece, so that the protrusion can be fixedly connected to the inner wall of the second through hole, and then the second through hole is sealed by the sealing nail to ensure the sealing performance of the pole.

The electronic device provided by the disclosure has high safety by applying the cylindrical battery.

### BRIEF DESCRIPTION OF THE DRAWING

FIG. 1 is a schematic structural view of an example of a cylindrical battery provided by an embodiment of the disclosure.
FIG. 2 is a cross-sectional view of the assembled state of a battery pole end in FIG. 1.
FIG. 3 is an exploded schematic view of the battery pole end in FIG. 1.
FIG. 4 is a structural schematic view of a connecting piece in FIG. 2.
FIG. 5 is a structural schematic view of a pole in FIG. 2.
FIG. 6 is a structural schematic view of a sealing nail in FIG. 2.
FIG. 7 is a schematic structural view of another example of a cylindrical battery provided by an embodiment of the disclosure.
FIG. 8 is a schematic structural view of the assembled state of a battery pole end in FIG. 7.
FIG. 9 is an exploded schematic diagram of the battery pole end in FIG. 7.
FIG. 10 is a structural schematic view of a connecting piece in FIG. 8.
FIG. 11 is the structural schematic view of a pole in FIG. 8.
FIG. 12 is a schematic structural view of a sealing nail in FIG. 8.

### DESCRIPTION OF THE EMBODIMENTS

The disclosure will be further described in detail below in conjunction with the accompanying drawings and embodiments. It should be understood that the specific embodiments described herein are only used to explain the disclosure, but not to limit the disclosure. In addition, it should be noted that, for the convenience of description, the drawings only show some but not all structures related to the disclosure.

In the description of the disclosure, unless otherwise expressly specified and limited, the terms "connected", "linked" and "fixed" should be understood in a broad sense. For example, it may be a fixed connection, a detachable connection, or an integrated; it can be a mechanical connection or an electrical connection; it can be directly connected, or indirectly connected through an intermediate medium, and it can be the internal communication between two elements or the interaction relationship between the two elements. For those of ordinary skill in the art, the specific meanings of the terms in the disclosure can be understood in specific situations.

In the disclosure, unless otherwise expressly specified and limited, a first feature "on" or "under" a second feature may include the first and second features in direct contact, or may include the first and second features not in direct contact but through additional features between them. Also, the first feature being "above", "over" and "on" the second feature includes the first feature being directly above and obliquely above the second feature, or simply means that the first feature has a higher level than the second feature. The first feature is "below", "beneath" and "under" the second feature includes the first feature being directly below and diagonally below the second feature, or simply means that the first feature has a lower level than the second feature.

In the disclosure, the terms "up", "down", "left", "right" and other azimuth or positional relationships are based on the azimuth or positional relationship shown in the accompanying drawings, which are only for the convenience of description and simplification of operations. It is not intended to indicate or imply that the device or element referred to must have a specific orientation, be constructed and operated in a specific orientation, and therefore should not be construed as limiting the disclosure. In addition, the terms "first" and "second" are only used for distinguishing in description, and have no special meaning.

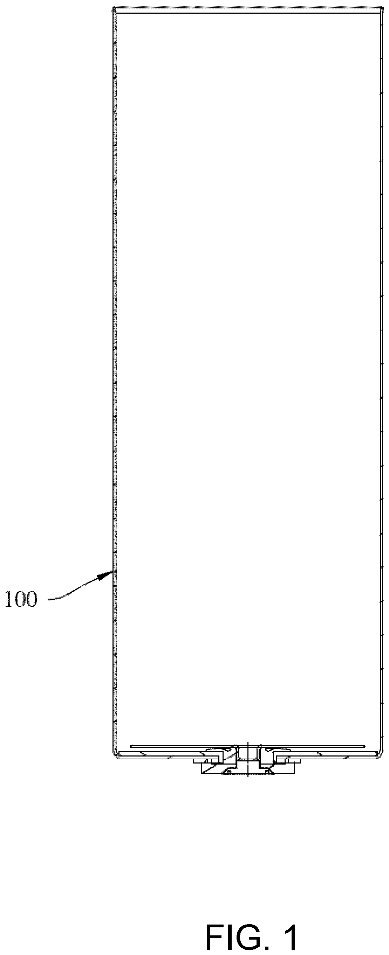

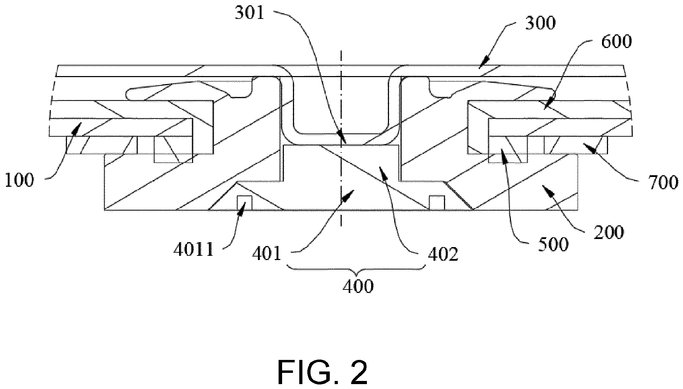

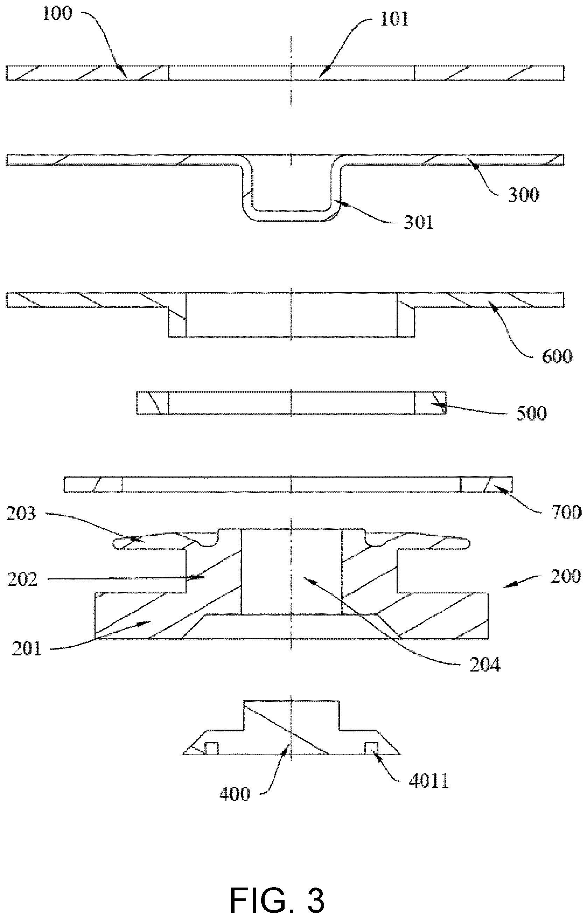

FIG. 1 illustrates a schematic structural view of a cylindrical battery provided by an embodiment of the disclosure. FIG. 2 illustrates a cross-sectional view of the assembled state of a battery pole end in FIG. 1. FIG. 3 illustrates an exploded schematic view of the battery pole end in FIG. 1. As shown in FIG. 1 to FIG. 3, the embodiment provides a cylindrical battery, including a case 100, a pole 200, a connecting piece 300, and a sealing nail 400. The case 100 includes a cylindrical side wall and an end wall connected to the side wall, and a first through hole 101 is disposed on the end wall. The pole 200 includes a second through hole 204 and passes through the first through hole 101 (refer to FIG. 3). The connecting piece 300 is disposed in the case 100, and the connecting piece 300 includes a protrusion 301. The protrusion 301 extends into the second through hole 204, and the protrusion 301 is fixedly connected to the inner wall of the second through hole 204. The sealing nail 400 is hermetically fixed in the second through hole 204. In the cylindrical battery, the second through hole 204 is formed on the pole 200, and the protrusion 301 is disposed on the connecting piece 300, so that the protrusion 301 can be fixedly connected to the inner wall of the second through hole 204 and then seal the second through hole 204 by the sealing nail 400, which ensures the sealing performance of the pole 200.

Optionally, the protrusion 301 may be fixed to the inner wall of the second through hole 204 by welding. For example, the outer peripheral surface of one end of the protrusion 301 facing the sealing nail 400 and the inner wall of the second through hole 204 are welded and fixed by butt welding.

Optionally, the case 100 may be a steel case, and the pole 200 is a positive pole; or the case 100 may be an aluminum case, and the pole 200 is a negative pole.

As shown in FIG. 3, the pole 200 includes a limiting portion 201 and a connecting portion 202. The limiting portion 201 is disposed outside the case 100, the connecting portion 202 passes through the first through hole 101 and is disposed at one end of the case 100 with a riveting portion 203, and the second through hole 204 penetrates the connecting portion 202.

As shown in FIG. 3 and FIG. 2, the cylindrical battery provided by the embodiment of the disclosure further includes a sealing element 500. The sealing element 500 is disposed between the limiting portion 201 of the pole 200 and the end wall of the case 100. The cylindrical battery provided by the embodiment of the disclosure further includes an inner insulating element 600, and at least part of the inner insulating element 600 is disposed between the riveting portion 203 and the end wall of the case 100 to ensure the insulation setting between the riveting portion 203 and the end wall of the case 100. The cylindrical battery further includes an outer insulating element 700, and at least part of the outer insulating element 700 is disposed between the limiting portion 201 and the end wall of the case 100 to ensure the insulating setting between the limiting portion 201 and the end wall of the case 100. Optionally, the cylindrical battery further includes the sealing element 500, the sealing element 500 is disposed around the connecting portion 202, and at least part of the sealing element 500 is disposed between the limiting portion 201 and the end wall of the case 100 to ensure that the sealing element 500 has a sufficient amount of compression to ensure the sealing between the pole 200 and the case 100.

Optionally, the material of the sealing element 500 is fluorine rubber.

In FIG. 2, the inner insulating element 600 includes a first inner insulating portion and a second inner insulating portion vertically disposed. The first inner insulating portion is disposed between the riveting portion 203 of the pole 200 and the end wall of the case 100, and the second inner insulating portion is disposed in the first through hole 101. In FIG. 2, the outer insulating element 700 is a flat plate, and the outer insulating element 700 is disposed between the limiting portion 201 of the pole 200 and the end wall of the case 100. The sealing element 500 is disposed between the inner annular surface of the outer insulating element 700 and the connecting portion 202 of the pole 200. In other embodiments, the inner insulating element 600 may also be a flat plate, the sealing element 500 includes a first sealing portion and a second sealing portion, and the first sealing portion is disposed between the limiting portion 201 of the pole 200 and the end wall of the case 100. The second sealing portion passes through the first through hole 101 and abuts against the first through hole 101. The outer insulating element 700 includes a first outer insulating portion and a second outer insulating portion, the first outer insulating portion is disposed between the limiting portion 201 and the end wall, and the second outer insulating portion covers the outer peripheral surface of the limiting portion 201. In this design, the first outer insulating portion ensures the insulating setting of the limiting portion 201 and the end wall of the case 100. By covering the outer peripheral surface of the limiting portion 201 through the second outer insulating portion, the outer peripheral surface of the limiting portion 201 is prevented from being in direct contact with the end wall of the case 100, resulting from the assembly force compressing the outer insulating element 700.

Optionally, the area ratio of the inner insulating element 600 to the end wall of the case 100 is 0.7-1. Such a design enables the inner insulating element 600 to further ensure the insulating setting between the connecting piece of the cylindrical battery and the end wall of the case 100. For example, the area ratio of the inner insulating element 600 to the end wall of the case 100 is any value ranging from 0.7 to 1, such as 0.7, 0.8, 0.9, 1, and the like, as long as it can ensure that the inner insulating element 600 can ensure the insulating setting between the connecting piece and the end wall of the case 100, which may not be specifically illustrated herein. Preferably, when the inner insulating element 600 includes the first inner insulating portion and the second inner insulating portion, at least part of the first inner insulating portion is disposed between the riveting portion 203 and the end wall, and at least part of the second inner insulating portion is disposed inside the first through hole 101. In this design, the first inner insulating portion ensures the insulating setting between the riveting portion 203 and the end wall, and the second inner insulating portion ensures the insulating setting between the connecting portion 202 and the inner wall of the first through hole 101 on the end wall. Furthermore, when the inner insulating element 600 includes the first inner insulating portion and the second inner insulating portion, the area ratio of the first inner insulating portion to the end wall of the case 100 is 0.7-1.

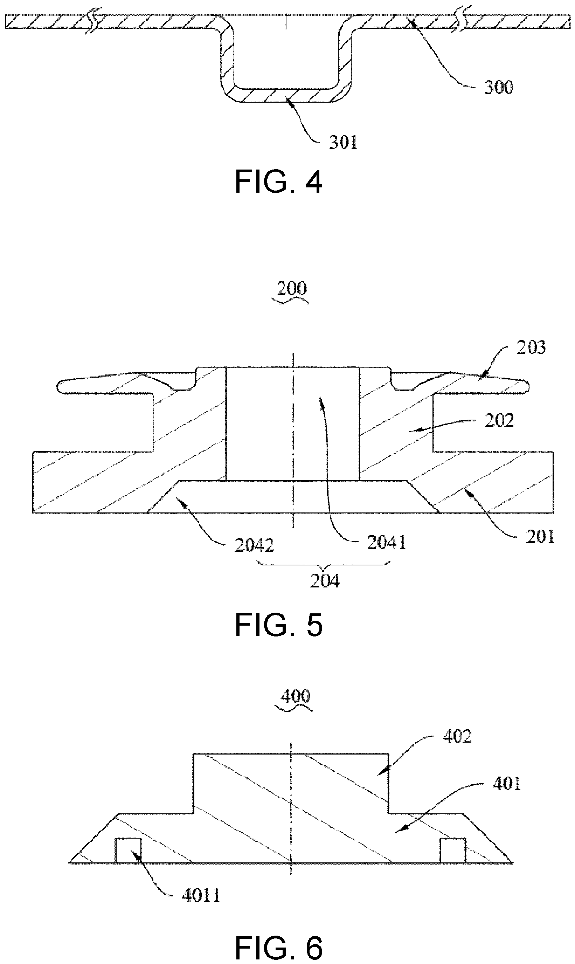

FIG. 4 illustrates a structural schematic view of the connecting piece 300 provided by the embodiment of the disclosure. FIG. 5 illustrates a structural schematic view of the pole 200 provided by the embodiment of the disclosure. FIG. 6 illustrates a structural schematic view of the sealing nail 400 provided by the embodiment of the disclosure. As shown in FIG. 4 to FIG. 6, the second through hole 204 includes a straight through portion 2041 and a first concave portion 2042 disposed in sequence along the direction from the inside of the case 100 to the outside of the case 100. The protrusion 301 of the connecting piece 300 extends into the straight through portion 2041, the sealing nail 400 includes a cover portion 401, and the cover portion 401 is cooperated with the first concave portion 2042.

Optionally, the side wall of the first concave portion 2042 and the bottom surface of the first concave portion 2042 are disposed at an obtuse angle, at a right angle, or at a rounded angle. Such a design facilitates the configuration of the sealing nail 400 in the first concave portion 2042.

As shown in FIG. 4 and FIG. 2, the surface of the protrusion 301 facing the sealing nail 400 protrudes from the end wall of the case 100. When the protrusion 301 and the inner wall of the second through hole 204 are fixed by welding, the design allows the welding part of the protrusion 301 and the second through hole 204 to face away from the battery core in the case 100 to reduce the influence of welding heat on the battery core. Preferably, the surface of the protrusion 301 facing the sealing nail 400 does not exceed the bottom surface of the first concave portion 2042. In this design, the length of the straight through portion 2041 is greater than the length of the protrusion 301, so that a certain space is reserved for the straight through portion 2041 to cooperate with the sealing nail 400.

As shown in FIG. 6 and FIG. 5, the cover portion 401 of the sealing nail 400 and the first concave portion 2042 are fixedly connected by welding. For example, the cover portion 401 of the sealing nail 400 and the bottom surface of the first concave portion 2042 are welded by laser penetration welding, the laser device is located outside the case 100, and the laser energy passes through the cover portion 401 of the sealing nail 400 to weld the cover portion 401 on the first concave portion 2042. In other embodiments, the cover portion 401 of the sealing nail 400 may also be welded and fixed to the side wall of the first concave portion 2042 by butt welding, that is, the outer peripheral surface of the cover portion 401 and the inner annular surface of the first concave portion 2042 are welded and fixed. The welding method can well control the laser energy and a virtual welding is prevented.

Preferably, after the sealing nail 400 is welded and fixed to the first concave portion 2042, the surface of the sealing nail 400 facing away from the connecting piece 300 does not exceed the end surface of the pole 200 outside the case 100. Preferably, the end face of the sealing nail 400 facing away from the connecting piece 300 is preferably less than the end face of the pole 200 outside the case 100 for facilitating the connection between the end face of the pole 200 outside the case 100 and the outer converging metal plate when the batteries are assembled. However, if the surface of the sealing nail 400 facing away from the connecting piece 300 exceeds the end surface of the pole 200 outside the case 100, interference may be generated, affecting the welding.

As shown in FIG. 6, the sealing nail 400 includes a groove 4011 for releasing welding stress. The groove 4011 is an annular groove formed on the cover portion 401.

Furthermore, on the bottom surface, the sealing nail 400 further includes a plug portion 402, and the plug portion 402 is cooperated with the straight through portion 2041. Such a design is adapted for a scenario in which the length of the protrusion 301 of the connecting piece 300 is less than the length of the straight through portion 2041, and the assembly stability of the sealing nail 400 and the pole 200 is ensured by configuring the plug portion 402 on the sealing nail 400 to cooperate with the straight through portion 2041.

For example, when the surface of the protrusion 301 facing the sealing nail 400 is flush with the bottom surface of the first concave portion 2042, the shape of the sealing nail 400 may be a flat plate with only the cover portion 401 but without the plug portion 402. For example, the sealing nail 400 is thin cylindrical. When the surface of the protrusion 301 facing the sealing nail 400 does not exceed and is not flush with the bottom surface of the first concave portion 2042, the shape of the sealing nail 400 may be a stepped shape with both the cover portion 401 and the plug portion 402. For example, the sealing nail 400 is stepped cylindrical.

The embodiment also provides an electronic device (not shown in the drawing), including the illustrated cylindrical battery. With the cylindrical battery, the safety is high.

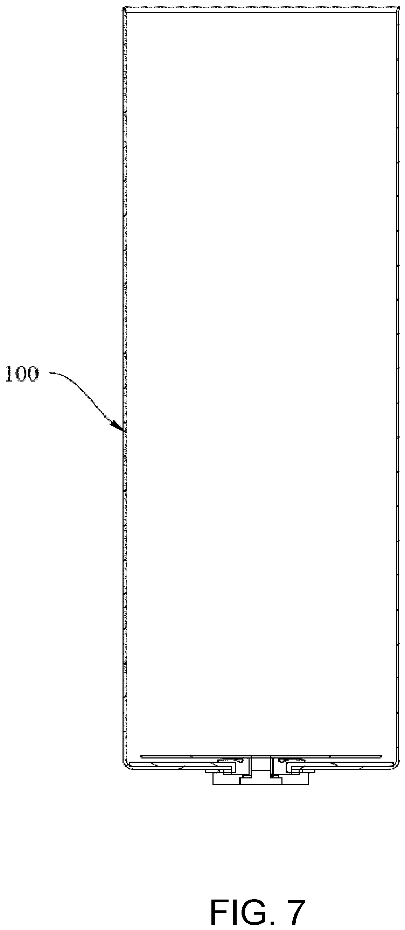

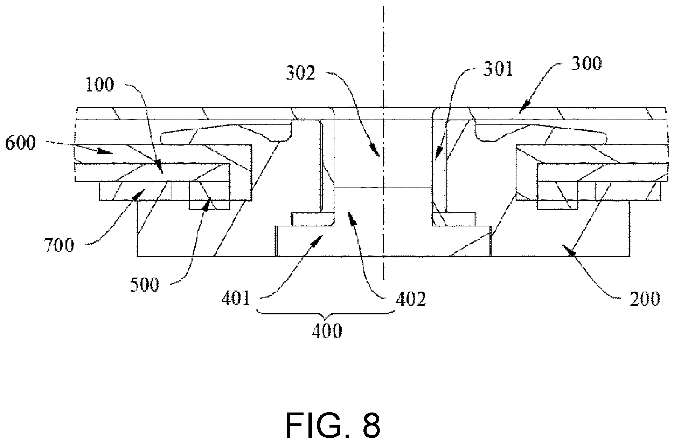

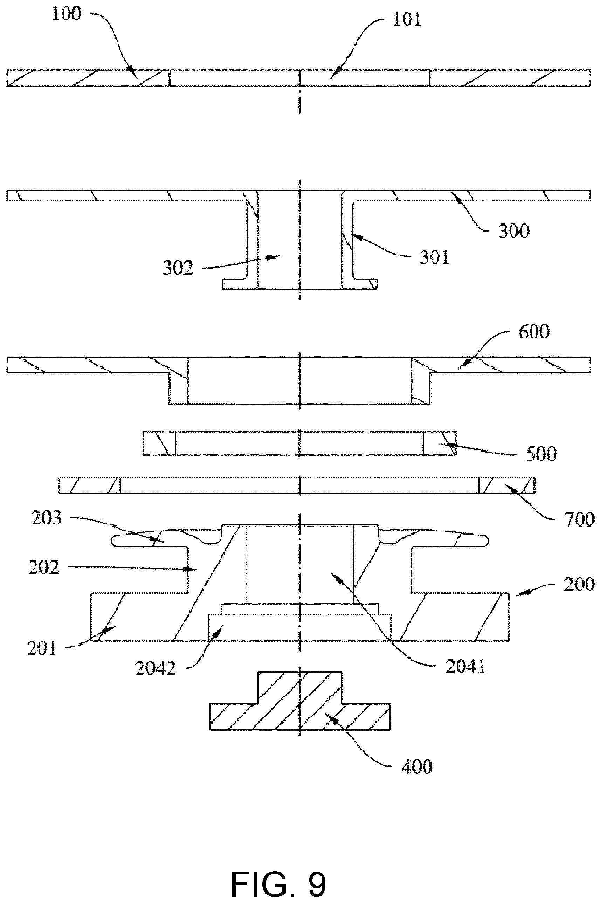

FIG. 7 illustrates a schematic structural view of a cylindrical battery provided by another embodiment of the disclosure. FIG. 8 illustrates a cross-sectional view of a battery pole end in the assembled state in FIG. 7. FIG. 9 illustrates an exploded schematic view of the battery pole end in FIG. 7. As shown in FIG. 7 to FIG. 9, the embodiment provides a cylindrical battery, including the case 100, the pole 200, the connecting piece 300, and the sealing nail 400. The case 100 includes a cylindrical side wall and an end wall connected to the side wall, and the first through hole 101 is disposed on the end wall; the pole 200 includes the second through hole 204, and the pole 200 passes through the first through hole 101 (refer to FIG. 9). The connecting piece 300 is disposed in the case 100, the connecting piece 300 includes the protrusion 301, the protrusion 301 extends into the second through hole 204, and the protrusion 301 is fixedly connected to the inner wall of the second through hole 204; the sealing nail 400 is hermetically fixed in the second through hole 204. In the cylindrical battery, the second through hole 204 is formed on the pole 200, and the protrusion 301 is disposed on the connecting piece 300, so that the protrusion 301 can be fixedly connected to the inner wall of the second through hole 204, and the sealing performance of the pole 200 is ensured by sealing the second through hole 204 through the sealing nail 400.

Optionally, the case 100 may be a steel case, and the pole 200 is a positive pole.

The main difference between the cylindrical battery provided in the embodiment and the cylindrical battery of the first embodiment is as follows.

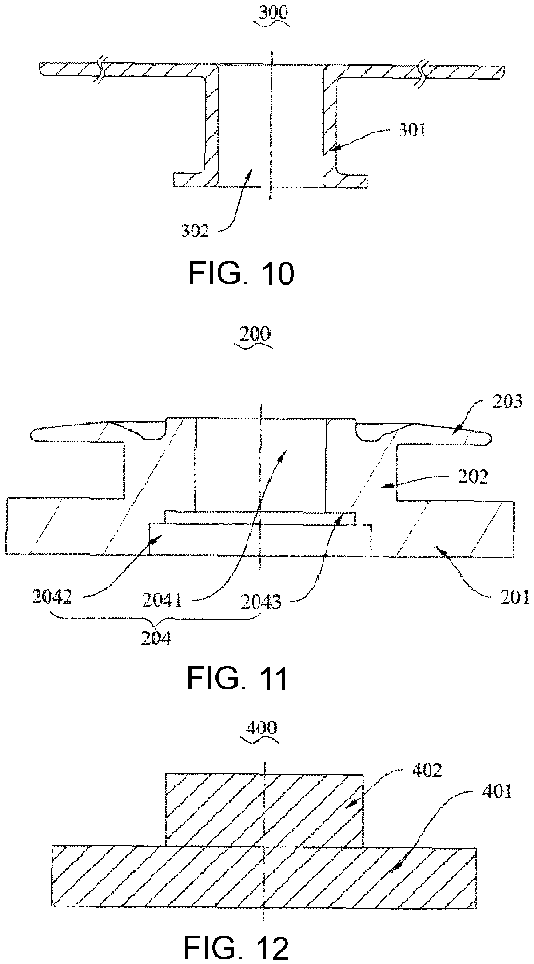

As shown in FIG. 10 and FIG. 9, the protrusion 301 includes a third through hole 302, and the third through hole 302 communicates with the second through hole 204. The third through hole 302 can be used as a liquid injection hole. Before assembling the sealing nail 400, the electrolyte is injected into the case 100 through the second through hole 204 and the third through hole 302, and the assembly of the sealing nail 400 is performed after the electrolyte injection is completed. Compared with the liquid injection at the negative end of the case 100 in the conventional technology, the battery assembly and liquid injection operations are more convenient in this method.

Optionally, the end of the protrusion 301 facing the sealing nail 400 may be fixedly connected to the inner wall of the second through hole 204 by welding or may be riveted to the inner wall of the second through hole 204 by riveting. In the embodiment, the protrusion 301 is preferably riveted and fixed to the inner wall of the second through hole 204.

FIG. 11 illustrates the structural schematic view of the pole 200 provided by an embodiment of the disclosure. FIG. 12 illustrates a schematic structural view of the sealing nail 400 provided by an embodiment of the disclosure. As shown in FIG. 11 to FIG. 12, when the protrusion 301 is riveted to the inner wall of the second through hole 204, the second through hole 204 further includes a second concave portion 2043, the second concave portion 2043 is disposed between the straight through portion 2041 and the first concave portion 2042, and one end of the protrusion 301 facing the sealing nail 400 is riveted and fixed to the second concave portion 2043. For example, the straight through portion 2041, the second concave portion 2043 and the first concave portion 2042 are disposed in a form of a staircase, the diameter of the straight through portion 2041 is less than the diameter of the second concave portion 2043, the diameter of the second concave portion 2043 is less than the diameter of the first concave portion 2042, and the end of the protrusion 301 facing the sealing nail 400 is riveted to the stepped surface of the second concave portion 2043.

Optionally, the diameter of the connecting portion 202 is D₀, the diameter of the second through hole 204 is D₁, and 0.5D₀<D₁<0.8D₀. For example, the diameter Di of the second through hole 204 may be any value between 0.5D₀<D₁<0.8D₀, such as 0.5D₀, 0.6D₀, 0.7D₀, 0.8D₀, and the like.

The embodiment also provides an electronic device (not shown in the drawing), including the illustrated cylindrical battery. With the cylindrical battery, the safety is high.

## Claims

1. A cylindrical battery, comprising:
a case (100), comprising a cylindrical side wall and an end wall connected to the side wall, wherein the end wall is provided with a first through hole (101);
a pole (200), comprising a second through hole (204), wherein the pole (200) passes through the first through hole (101) and is fixed on the case (100);
a connecting piece (300), disposed in the case (100), wherein the connecting piece (300) comprises a protrusion (301), the protrusion (301) extends into the second through hole (204), and the protrusion (301) is fixedly connected to an inner wall of the second through hole (204);
a sealing nail (400), hermetically fixed in the second through hole (204).

2. The cylindrical battery according to claim 1, wherein the second through hole (204) comprises a straight through portion (2041) and a first concave portion (2042) disposed in sequence along a direction from the inside of the case (100) to the outside of the case (100), and the sealing nail (400) comprises a cover portion (401) that is cooperated with the first concave portion (2042).

3. The cylindrical battery according to claim 1 or 2, wherein a side wall of the first concave portion (2042) and a bottom surface of the first concave portion (2042) are disposed at an obtuse angle, at a right angle, or at a rounded angle.

4. The cylindrical battery according to any one of claims 1-3, wherein a surface of the protrusion (301) facing the sealing nail (400) does not exceed a bottom surface of the first concave portion (2042).

5. The cylindrical battery according to any one of claims 1-4, wherein a surface of the sealing nail (400) facing away from the connecting piece (300) does not exceed an end surface of the pole (200) outside the case (100).

6. The cylindrical battery according to any one of claims 1-5, wherein the cover portion (401) is fixed to a bottom surface of the first concave portion (2042) by welding, or
the cover portion (401) is fixed to a side wall of the first concave portion (2042) by welding.

7. The cylindrical battery according to any one of claims 1-6, wherein a surface of the cover portion (401) facing away from the connecting piece (300) comprises a groove (4011).

8. The cylindrical battery according to any one of claims 1-7, wherein a surface of the protrusion (301) facing the sealing nail (400) protrudes from the end wall of the case (100).

9. The cylindrical battery according to any one of claims 1-8, wherein the protrusion (301) comprises a third through hole (302), and the third through hole (302) communicates with the second through hole (204).

10. The cylindrical battery according to any one of claims 1-9, wherein the pole (200) comprises a limiting portion (201) and a connecting portion (202), the limiting portion (201) is located outside the case (100), the connecting portion (202) passes through the first through hole (101), and the second through hole (204) penetrates the connecting portion (202).

11. The cylindrical battery according to any one of claims 1-10, wherein a diameter of the connecting portion (202) is D₀, a diameter of the second through hole (204) is D₁, and 0.5D₀<D₁<0.8D₀.

12. The cylindrical battery according to any one of claims 1-11, wherein the cylindrical battery further comprises a sealing element (500), the sealing element (500) is disposed around the connecting portion (202), and at least part of the sealing element (500) is disposed between the limiting portion (201) and the end wall of the case (100).

13. The cylindrical battery according to any one of claims 1-12, wherein one end of the protrusion (301) facing the sealing nail (400) is fixed to the inner wall of the second through hole (204) by welding.

14. The cylindrical battery according to any one of claims 1-13, wherein the second through hole (204) further comprises a second concave portion (2043), the second concave portion (2043) is disposed between the straight through portion (2041) and the first concave portion (2042), one end of the protrusion (301) facing the sealing nail (400) is riveted and fixed to the second concave portion (2043).

15. An electronic device, comprising the cylindrical battery according to any one of claims 1-14.
